Europäisches Patentamt

European Patent Office

Office européen des brevets

(11) Veröffentlichungsnummer: **0 019 853**
**B1**

(12) # EUROPÄISCHE PATENTSCHRIFT

(45) Veröffentlichungstag der Patentschrift:
21.09.83

(21) Anmeldenummer: **80102843.2**

(22) Anmeldetag: **22.05.80**

(51) Int. Cl.³: **C 01 G 43/025**, B 01 J 2/08,
G 21 C 3/62

(54) **Giesslösung enthaltend Uranylnitrat zur Herstellung kugelförmiger Kernbrennstoffpartikel und Verfahren zu ihrer Herstellung.**

(30) Priorität: **02.06.79 DE 2922686**

(43) Veröffentlichungstag der Anmeldung:
**10.12.80 Patentblatt 80/25**

(45) Bekanntmachung des Hinweises auf die Patenterteilung:
**21.09.83 Patentblatt 83/38**

(84) Benannte Vertragsstaaten:
**BE FR GB IT**

(56) Entgegenhaltungen:
**DE-A-2 121 185**
**DE-B-1 283 199**
**GB-A-1 175 834**
**GB-A-1 178 680**
**US-A-3 397 257**

(73) Patentinhaber: **Kernforschungsanlage Jülich
Gesellschaft mit beschränkter Haftung, Postfach 1913,
D-5170 Jülich (DE)**

(72) Erfinder: **Hein, Kurt, Artilleriestrasse 43, D-5170 Jülich
(DE)**
Erfinder: **Zimmer, Erich, Dr., Kommstrasse 2b,
D-5170 Jülich (DE)**

ACTORUM AG

Giesslösung enthaltend Uranylnitrat zur Herstellung kugelförmiger Kernbrennstoffpartikeln und Verfahren zu ihrer Herstellung

Die Erfindung bezieht sich auf eine Giesslösung enthaltend Uranylnitrat zur Herstellung kugelförmiger Kernbrennstoffpartikel aus Uranoxid und/oder Urancarbid und/oder einem uranhaltigen Mischoxid oder einem Mischcarbid. Die Giesslösung wird mit Ammoniak vorneutralisiert und zur Herstellung der Partikeln in eine ammoniakhaltige Phase vertropft. Gegenstand der Erfindung ist daneben ein Verfahren zur Herstellung der Giesslösung.

Es ist bekannt, Partikeln aus Kernbrennstoff oder Kernbrenn- und Kernbrutstoff, die hier vereinfachend sämtlich als Kernbrennstoffpartikeln bezeichnet werden, nasschemisch zu erzeugen. Bei diesen Verfahren werden Lösungen oder Hydrosole, die die Kernbrenn- und/oder Kernbrutstoffe enthalten, in Tropfen zerteilt und als Tropfen durch chemische Reaktion verfestigt. Aus den so entstandenen Grünlingen erhält man dann nach weiteren Verfahrensschritten, wie Waschen, Trocknen und Sintern, als Endprodukte keramische kugelförmige Teilchen, die Durchmesser zwischen etwa 0,1 und 1 mm aufweisen. Zur Herstellung carbidischer Kernbrennstoffpartikeln enthalten die Giesslösungen noch Kohlenstoff in suspendierter Form. Neben Uran kann den Giesslösungen als Kernbrennstoff auch Thorium und/oder Plutonium zugegeben sein.

Für Partikeln aus Uranoxid und/oder Urancarbid und/oder einem uranhaltigen Mischoxid oder einem Mischcarbid ist es bekannt, ein Hydrosol des vierwertigen Urans in 2-Ethylhexanol einzutropfen (P.A. Haas et al, «Preparation of Reactor Fuel by Sol-Gel Processes», Chem. Eng. Progress, Symp. Ser., Vol. 63 (80), New York 1967, Seiten 16 bis 27). Die Verfestigung der Tropfen tritt innerhalb der organischen Lösung durch Extraktion von Wasser aus den Tropfen ein. Dieses Verfahren ist nachteilig, weil insbesondere der Wassergehalt des 2-Ethylhexanols stets exakt kontrolliert werden muss und sich die Tropfen des Hydrosols nur langsam verfestigen. Hinzu kommt, dass das vierwertige Uran im Kontakt mit Luft sehr rasch oxidiert, so dass Herstellung und Verarbeitung des Hydrosols nur unter Luftabschluss erfolgen kann, da andernfalls das Uran im Hydrosol kristallin ausfällt.

Um den Umgang mit vierwertigem Uran zu vermeiden, sind Verfahren entwickelt worden, die die Verwendung von sechswertigem Uran, U (VI), in der Giesslösung in Form von Uranylnitrat, $UO_2(NO_3)_2$, erlauben.

So ist eine Uranylnitratlösung bekannt, der Harnstoff (zur Komplexbildung mit $UO_2^{2+}$) und Hexamethylentetramin zugesetzt ist. Wird diese Lösung in ein heisses organisches Lösungsmittel eingetropft, zersetzt sich das Hexamethylentetramin unter Ammoniak-Abspaltung, und die dadurch eingeleitete Ausfällung des Urans verfestigt die Tropfen, DE-C-1 960 289. Da bei diesem Verfahrensprinzip Ammoniak in den Tropfen selber erzeugt wird, spricht man von «interner Gelierung». Jedoch lässt sich eine Ausfällung des Urans durch langsames Zersetzen des Hexamethylentetramins schon vor dem Vertropfen der Giesslösung nicht in allen Fällen vermeiden. Die Giesslösung ist nur kurze Zeit stabil. Um die Reaktionsgeschwindigkeit herabzusetzen und die Aushärtezeit zu verlängern, lassen sich nach DE-B-1 283 199 Alkohole, wie Methanol, Propyl-, Butyl- oder Amylalkohol, Äthylenglycol und Glycerin zusetzen.

Bekannt sind auch Verfahren mit «externer Gelierung» der Tropfen. Dabei werden Lösungen oder Hydrosole, die die Kernbrenn- und/oder Kernbrutstoffe enthalten, mittels Ammoniak oder ammoniakabgebender Substanzen vorneutralisiert und in ein ammoniakhaltiges Bad eingetropft. Unter «Vorneutralisation» wird eine Anhebung des pH-Wertes der Giesslösung unter Zugabe einer Ammoniakmenge verstanden, die unterhalb der stöchiometrisch für die Ausfällung von Uran aus der Giesslösung erforderlichen Menge bleibt. Zum Eindicken solcher Lösungen ist es bekannt, Methylcellulose in Verbindung mit Tetrahydrofurfurylalkohol zuzugeben. Nachteilig ist hier die geringe Schwermetallkonzentration der Giesslösung einerseits und die hohe Tetrahydrofurfurylalkoholkonzentration anderseits. Auch die Methylcellulose stört bei der Weiterverarbeitung der Teilchen (Energia Nucleare 17 (1970) S. 217–224).

Zur Stabilisierung der Tropfenform Methylcellulose und Alkohole in der Giesslösung zu verwenden, wird auch in GB-A-2 178 680 und US-A-3 397 257 beschrieben. Die Alkohole sollen bei den Metallsalz-Celluloselösungen die Oberflächenspannung und die Viskosität der Lösung beeinflussen. Als besonders geeignet werden Äthanol, Isopropanol sowie zweiwertige Alkohole der Formel $HOCH_2-(CH_2)_n-CH_2OH$ vorgeschlagen. Die Giesslösungen weisen jedoch nur eine verhältnismässig niedrige Schwermetallkonzentration pro Liter auf.

Ferner ist ein Verfahren mit externer Gelierung bekannt, bei dem die $UO_2(NO_3)_2$-Lösung Harnstoff und Ammoniumnitrat enthält. Die niedrige Viskosität dieser Giesslösung macht allerdings für die Herstellung von Teilchen grösseren Durchmessers die Verwendung eines Fällbades erforderlich, welches aus zwei Phasen, einer organischen und einer wässrigen, besteht. Zur Tropfenerzeugung werden Zweistromdüsen eingesetzt. Erforderlich ist auch eine Rezyklierung der organischen Phase, DE-C-2 323 072.

Es ist auch vorgeschlagen worden, einer $UO_2(NO_3)_2$-Lösung relativ geringer Konzentration neben Harnstoff und Ammoniumnitrat noch Polyvinylalkohol zur Viskositätserhöhung zuzusetzen (Energia Nucleare 17 (1970) S. 217–224). Der Durchmesser der durch Vertropfen dieser Lösung erzeugten Partikeln nach dem Sintern ist jedoch auf 0,2 mm beschränkt.

Aufgabe der Erfindung ist es, eine für die externe Gelierung der Tropfen geeignete, Uranylnitrat enthaltende Giesslösung zu schaffen, die bei hoher Uran-Konzentration weitgehend vorneutralisiert und hochviskos ist.

Der Erfindung liegt die Erkenntnis zugrunde, dass die Bildung von Niederschlägen beim Zusatz von Ammoniak in Uranylnitratlösungen verhindert werden kann und die Bildung eines Niederschlags erst bei Zusatz von wesentlich grösseren Ammoniakmengen auftritt, falls ein Polyalkohol in der Lösung anwesend ist.

Ausgehend hiervon wird die Aufgabe einer Giesslösung der eingangs erwähnten Art gemäss der Erfindung durch Zusatz von Sorbit gelöst, wobei der Giesslösung soviel Sorbit zugegeben wird, dass sich bei gewünschter Viskosität kein Niederschlag bildet. Besonders wirksam erweist sich die Zugabe von Sorbit bei Giesslösungen, die 20% und mehr Uranylnitrat, bezogen auf den Schwermetallgehalt der Giesslösung, enthalten. Es hat sich gezeigt, dass eine Zugabe von Sorbit bis zu einer Konzentration von $\frac{1}{3}$ Mol pro Mol Schwermetall in der Giesslösung ausreichend ist. Der Sorbit enthaltenden Giesslösung lässt sich Ammoniak zur Vorneutralisation in vorteilhafter Weise bis zu 90% der Ammoniakmenge zuführen, die stöchiometrisch für die Ausfällung des Urans erforderlich ist. Dabei entsteht ein hochviskoses Hydrosol, aus dem grosse Tropfen bildbar sind. Je nach angewandter Giessvorrichtung werden aus der Giesslösung gesinterte Kernbrennstoffpartikeln mit Durchmessern bis zu etwa 1,5 mm erzeugt.

Die Giesslösung wird gemäss der Erfindung in der Weise hergestellt, dass der Uranylnitrat enthaltenden Giesslösung vor der Zugabe von Ammoniak Sorbit zugesetzt wird. Bevorzugt wird der Giesslösung Sorbit bis zu einer Konzentration von $\frac{1}{3}$ Mol pro Mol Schwermetall zugegeben. Damit ist eine Vorneutralisation der Giesslösung bis zu 90% der stöchiometrisch für die Ausfällung des Urans erforderlichen Ammoniakmenge erreichbar.

Weitere Ausgestaltungen des erfindungsgemässen Verfahrens sind in Patentansprüchen 5–8 angegeben. Danach wird die Schwermetallkonzentration in der Giesslösung so eingestellt, dass im Hydrosol 1,5 bis 2 Mol Schwermetall pro Liter, vorzugsweise 1,8 Mol Schwermetall pro Liter, enthalten sind. Zur Optimierung der Fällungsreaktion in den Tropfen der Giesslösung beim Durchfallen der ammoniakhaltigen Phase hat es sich in einigen Fällen als zweckmässig erwiesen, der Giesslösung bis zu 4 Mol Ammoniumnitrat, $NH_4NO_3$, pro Liter zuzusetzen.

Es hat sich gezeigt, dass die Viskosität des Hydrosols bei Erreichen hoher Vorneutralisation schon durch Zugabe geringer Ammoniakmengen erheblich zunimmt. Um die angestrebte Höchstmenge an Ammoniak in die Giesslösung einzubringen, ist deshalb in weiterer Ausgestaltung des Verfahrens vorgesehen, zunächst den grössten Teil der vorbestimmten Ammoniakmenge in Form von Ammoniakgas unter starkem Rühren in die Sorbit enthaltende Giesslösung einzuleiten und den Endwert durch Zugabe von Ammoniumhydrogencarbonat, $NH_4HCO_3$, einzustellen. Ammoniumhydrogencarbonat zersetzt sich in der durch Hydrolyse sauren Giesslösung unter Abspaltung von Ammoniak. Die sich zersetzende $NH_4HCO_3$-Menge ist abhängig von der Temperatur in der Lösung. Die Zersetzung kommt bei Einhalten einer bestimmten Temperatur zum Stillstand. Durch Zugabe von Ammoniumhydrogencarbonat im Überschuss bei zugleich exakter Kontrolle der Temperatur lässt sich infolgedessen die Vorneutralisation und damit die Viskosität des sorbithaltigen Hydrosols sehr genau einstellen. Der genutzte Temperaturbereich liegt zwischen 15 und 40°C. Die Viskosität eines 1,8 Mol Schwermetall pro Liter enthaltenden Hydrosols lässt sich auf diese Weise zwischen 10 und $10^3$ mPa·s (Milli-Pascal-Sekunde) einstellen. Es sind auch höhere Viskositätswerte erreichbar, jedoch sind solche Hydrosole nicht ohne zusätzlichen Aufwand vertropfbar. Nach Abtrennen des überschüssigen $NH_4HCO_3$ durch Filtration ist das Hydrosol fertiggestellt.

Falls $UC_2$-Teilchen hergestellt werden sollen, wird dem Hydrosol in an sich bekannter Weise Kohlenstoff in kolloidaler Form zugesetzt.

Zum Vergiessen des Hydrosols sind verschiedene bekannte Vorrichtungen zur Erzeugung von Kernbrennstoffpartikeln unter externer Gelierung der Tropfen geeignet.

Wird eine Giessvorrichtung, wie sie in Energia Nucleare 17 (1970) S. 217–224 beschrieben wird, benutzt, so lassen sich kugelförmige, gesinterte Teilchen bis zu einem Durchmesser von 0,6 mm herstellen. Bei Verwendung einer Vorrichtung gemäss deutschem Patent 2 714 873 steigt der maximale Durchmesser auf 0,8 mm an. Falls kugelförmige Teilchen mit Durchmessern bis zu 1,5 mm erzeugt werden sollen, kann eine Zweiphasen-Giesssäule, wie sie in der deutschen Patentschrift 2 147 472 beschrieben wird, eingesetzt werden.

Die weitere Behandlung der gelierten Tropfen wird beispielsweise auf folgendem Wege durchgeführt: Zunächst wird durch Waschen mit Wasser das in den Teilchen enthaltene $NH_4NO_3$ entfernt. Dann werden die Teilchen langsam in ausreichend befeuchteter Luft getrocknet. Es hat sich als zweckmässig erwiesen, die Temperatur in etwa 6 h auf 500° zu steigern. Bei dieser Behandlung verbrennt der in den Teilchen enthaltene Sorbit vollständig. Anschliessend wird Wasserstoff über die Teilchen geleitet, um Urandioxid, $UO_2$, zu erzeugen. Die Sintertemperatur beträgt etwa 1450°C.

Falls dem Hydrosol Kohlenstoff in kolloidaler Form zugesetzt wird, um $UC_2$ zu erzeugen, erfolgt die Wärmebehandlung der gelierten Partikel unter Inertgas oder in Wasserstoffatmosphäre, um ein Verbrennen des Kohlenstoffs zu vermeiden. Die carbothermische Reduktion des $UO_2$ zu $UC_2$ wird bei Temperaturen über 2000° durchgeführt.

Ausführungsbeispiel 1

Zur Herstellung von 1 l eines 1,8 molaren Sols

wurden 903 g $UO_2(NO_3)_2$ und 288 g $NH_4NO_3$ in Wasser gelöst. Der Lösung wurden 109 g Sorbit zugesetzt. Danach wurden unter Rühren mit einem Dispergator 44 g Ammoniakgas zugegeben.

Anschliessend wurden unter weiterem Rühren 50 g $NH_4HCO_3$ zugesetzt. Die Temperatur während dieser Vorneutralisation der Giesslösung betrug 25 °C. Vom fertigen Hydrosol wurde überschüssiges $NH_4HCO_3$ dekantiert. Die Viskosität des Hydrosols betrug 180 mPa·s, der pH-Wert 2,9. Das Hydrosol wurde in einer Giessvorrichtung gemäss deutschen Patent 2 714 873 vergossen. Die gelierten Tropfen wurden mit Wasser gewaschen und von $NH_4NO_3$ befreit und anschliessend innerhalb von 6 h auf 500 °C aufgeheizt. Danach wurden die Teilchen in einer 4 Vol.-% Wasserstoff enthaltenden Argonatmosphäre zu $UO_2$ reduziert und schliesslich bei einer Temperatur von 1450 °C gesintert.

Der Durchmesser der gesinterten Partikeln betrug 0,9 mm. Ihre Kugelgestalt war nahezu ideal: als maximales Verhältnis von grössten zum kleinsten Durchmesser einer Partikel wurde 1,03 ermittelt.

Ausführungsbeispiel 2

1 l eines 1,8 molaren Sols wurde in gleicher Weise wie im Ausführungsbeispiel 1 hergestellt. Jedoch war die Temperatur während der Vorneutralisation der Giesslösung mit $NH_4HCO_3$ auf 22 °C eingestellt. Die Viskosität des Hydrosols betrug nach dieser Behandlung 57 mPa·s.

Zur Herstellung der Partikel wurde eine Zweiphasengiesssäule benutzt, wie sie in der deutschen Patentschrift 2 147 472 beschrieben ist. Die der Giesssäule entnommenen, gelierten Tropfen wurden in gleicher Weise, wie im Ausführungsbeispiel 1 beschrieben, getrocknet und gesintert.

Der Durchmesser der gesinterten Teilchen betrug 1,2 mm, als maximales Verhältnis von grössten zum kleinsten Durchmesser einer Partikel wurde 1,05 ermittelt.

Ausführungsbeispiel 3

Zur Herstellung von 1 l eines Uran und Thorium enthaltenden Hydrosols wurden 0,9 Mol $UO_2(NO_3)_2$ und 0,9 Mol $Th(NO_3)_4$ aufgelöst. Nach Zusatz von 108 g Sorbit wurden in die Giesslösung 56 g Ammoniakgas eingeleitet. Anschliessend wurde die Lösung mit 15 g $NH_4HCO_3$ versetzt. Die Temperatur betrug bei der Vorneutralisation 22 °C. Das Hydrosol hatte einen pH-Wert von 2,5 und eine Viskosität von 44 mPa·s.

Die weitere Verarbeitung erfolgte in gleicher Weise, wie sie im Ausführungsbeispiel 1 beschrieben ist. Der Durchmesser der gesinterten Partikeln betrug 0,9 mm.

Es hat sich gezeigt, dass Sorbit in der Giesslösung besonders bei mehr als 20% Uranylnitrat im Hydrosol bezogen auf den Schwermetallgehalt der Giesslösung wirksam ist. Sorbit ist auch in Giesslösungen verwendbar, die neben Uran Plutonium enthalten. Auch bei solchen Giesslösungen lassen sich bei Zugabe von Sorbit eine hohe Vorneutralisation und eine hohe Viskosität der Giesslösung erreichen.

**Patentansprüche**

1. Giesslösung enthaltend Uranylnitrat zur Herstellung kugelförmiger Kernbrennstoffpartikeln aus Uranoxid und/oder Urancarbid und/oder einem uranhaltigen Mischoxid oder einem Mischcarbid, die mit Ammoniak vorneutralisiert und in eine ammoniakhaltige Phase vertropft wird, gekennzeichnet durch einen so bemessenen Gehalt an Sorbit, dass bei vorbestimmter Viskosität der Giesslösung kein Niederschlag erfolgt.

2. Giesslösung nach Anspruch 1, dadurch gekennzeichnet, dass in der Giesslösung Sorbit bis zu einer Konzentration von $^1/_3$ Mol pro Mol Schwermetall enthalten ist.

3. Verfahren zur Herstellung einer Giesslösung enthaltend Uranylnitrat, die mit Ammoniak vorneutralisiert wird, nach Anspruch 1, dadurch gekennzeichnet, dass der Uranylnitrat enthaltenden Giesslösung vor Zugabe von Ammoniak Sorbit zugesetzt wird.

4. Verfahren nach Anspruch 3, dadurch gekennzeichnet, dass Sorbit bis zu einer Konzentration von $^1/_3$ Mol pro Mol Schwermetall zugesetzt wird.

5. Verfahren nach Anspruch 3 oder 4, dadurch gekennzeichnet, dass die Schwermetallkonzentration in der Giesslösung so eingestellt ist, dass im Hydrosol 1,5–2 Mol pro Liter Schwermetall, vorzugsweise 1,8 Mol pro Liter Schwermetall, enthalten sind.

6. Verfahren nach einem der Ansprüche 1–5, dadurch gekennzeichnet, dass der Giesslösung bis zu 4 Mol Ammoniumnitrat pro Liter zugesetzt werden.

7. Verfahren nach einem der vorhergehenden Ansprüche, dadurch gekennzeichnet, dass das Ammoniak in die Giesslösung zunächst in Form von Ammoniakgas unter starkem Rühren der Giesslösung und im Anschluss daran durch Zersetzen von Ammoniumhydrogencarbonat eingebracht wird.

8. Verfahren nach Anspruch 7, dadurch gekennzeichnet, dass das Ammoniumhydrogencarbonat in der Giesslösung im Überschuss bei einer Temperatur im Temperaturbereich zwischen 15 und 40 °C zersetzt wird und im Anschluss daran das überschüssige Ammoniumhydrogencarbonat abgetrennt wird.

**Claims**

1. Casting solution containing uranyl nitrate for the production of spherical nuclear fuel particles from uranium oxide and/or uranium carbide and/or a uranium-containing mixed oxide or a mixed carbide, which solution is pre-neutralised with ammonia and dripped into an ammonia-containing phase, characterised by a sorbite content so proportioned that when the viscosity of the casting solution is at a predetermined level no precipitation occurs.

2. Casting solution according to claim 1, characterised in that sorbite is contained in the casting solution up to a concentration of $1/_3$ mol per mol of heavy metal.

3. Process for the production of a casting solution containing uranyl nitrate and pre-neutralised with ammonia, according to claim 1, characterised in that the casting solution containing uranyl nitrate has sorbite added to it before the addition of ammonia.

4. Process according to claim 3, characterised in that sorbite is added up to a concentration of $1/_3$ mol per mol of heavy metal.

5. Process according to claim 3 or 4, characterised in that the heavy metal concentration in the casting solution is so adjusted that the hydrosol contains 1.5–2 mol per litre of heavy metal, preferably 1.8 mol per litre of heavy metal.

6. Process according to one of claims 3 to 5, characterised in that up to 4 mol of ammonium nitrate is added to the casting solution per litre.

7. Process according to one of the preceding claims, characterised in that the ammonia is introduced into the casting solution first in the form of ammonia gas with strong agitation of the casting solution, and subsequently thereto by decomposition of ammonium hydrogen carbonate.

8. Process according to claim 7, characterised in that the ammonium hydrogen carbonate is decomposed in the casting solution in excess at a temperature in the range between 15 and 40 °C, and then the excess ammonium hydrogen carbonate is separated off.

**Revendications**

1. Solution d'alimentation contenant du nitrate d'uranyle, pour la fabrication de particules sphériques de combustible nucléaire en oxyde d'uranium et/ou en carbure d'uranium et/ou en un oxyde mixte ou en un carbure mixte contenant de l'uranium, qui est neutralisée au préalable par de l'ammoniac et est envoyée, goutte à goutte, dans une phase contenant de l'ammoniac, caractérisée par une teneur en sorbitol telle que, pour une viscosité donnée à l'avance de la solution d'alimentation, il ne se forme pas de précipité.

2. Solution d'alimentation suivant la revendication 1, caractérisée en ce que la solution d'alimentation contient du sorbitol en une concentration allant jusqu'à $1/_3$ de mole par mole de métal lourd.

3. Procédé de préparation d'une solution d'alimentation contenant du nitrate d'uranyle, qui a été neutralisée au préalable par de l'ammoniac suivant la revendication 1, caractérisé en ce qu'il consiste à ajouter du sorbitol à la solution d'alimentation contenant du nitrate d'uranyle, avant l'addition d'ammoniac.

4. Procédé suivant la revendication 3, caractérisé en ce qu'il consiste à ajouter du sorbitol jusqu'à une concentration de $1/_3$ de mole par mole de métal lourd.

5. Procédé suivant la revendication 3 ou 4, caractérisé en ce qu'il consiste à régler la concentration de métal lourd de la solution d'alimentation de manière à ce que dans l'hydrosol soient contenues de 1,5 à 2 moles par litre de métal lourd et, de préférence, 1,8 mole par litre de métal lourd.

6. Procédé suivant l'une des revendications 3 à 5, caractérisé en ce qu'il consiste à ajouter à la solution d'alimentation jusqu'à 4 moles de nitrate d'ammonium par litre.

7. Procédé suivant l'une des revendications précédentes, caractérisé en ce qu'il consiste à introduire l'ammoniac dans la solution d'alimentation d'abord sous forme d'ammoniac gazeux, en agitant vigoureusement la solution d'alimentation, et ensuite par décomposition de bicarbonate d'ammonium.

8. Procédé suivant la revendication 7, caractérisé en ce qu'il consiste à décomposer le bicarbonate d'ammonium en excès dans la solution d'alimentation à une température comprise entre 15 et 40 °C, et ensuite à séparer le bicarbonate d'ammonium en excès.